# EUROPÄISCHE PATENTANMELDUNG

(11) **EP 0 828 391 A2**
(43) Veröffentlichungstag der Anmeldung: **11.03.1998**
(21) Anmeldenummer: 97402007.5
(22) Anmeldetag: 27.08.1997
(51) Int. Cl.: H04N 7/22

(54) **Sendeeinrichtung zur optischen Übertragung von analogen elektrischen Signalen und digitales Übertragungssystem**

(30) Priorität: 05.09.1996 DE 19635989
(71) Anmelder: ALCATEL ALSTHOM COMPAGNIE GENERALE D'ELECTRICITE, 75008 Paris (FR)
(72) Erfinder: Schlag, Erwin, 71665 Vaihingen (DE)
(74) Vertreter: Schätzle, Albin, Dipl.-Phys.

(57) **Zusammenfassung**

In einem digitalen optischen Übertragungssystem, z.B. ein passives optisches Verteilnetz, sollen analoge elektrische Signale, z.B. Videosignale, derart optisch übertragen werden, daß ihre Rückgewinnung in einer Empfangseinrichtung ( BONT ) technisch einfach erfolgen kann. Die Sendeeirichtung des Übertragungssystems beinhaltet dazu einen Delta-Sigma-Modulator ( MOD ) und einen Elektrisch/Optisch-Umsetzer ( EO ). Im Delta-Sigma-Modulator ( MOD ) werden die analogen elektrischen Signale nach dem Delta-Sigma-Modulationsverfahren digitalisiert. Anschließend werden sie im Elektrisch/Optisch-Umsetzer ( EO ) in optische Signale umgesetzt und über Glasfaserleitungen zu mehreren Empfangseinrichtungen ( BONT ) übertragen. Zur Rückgewinnung der analogen elektrischen Signale wird in jeder Empfangseinrichtung ( BONT ) lediglich ein Optisch/Elektrisch-Umsetzer ( OE ) und ein passives elektrisches Filter ( FIL ) benötigt. Das Filter ( FIL ) ist in einen Fall ein passiver Tiefpaß und in einem anderen Fall ein passiver Bandpaß. Durch geeignete Wahl der Abtasttfrequenz für die Delta-Sigma-Modulation und der Ausnutzung von Spiegelfrequenzen zur Übertragung können in jeder Empfangseinrichtung ( BONT ) Frequenzumsetzer eingespart werden.

## Beschreibung

Die Erfindung betrifft eine Sendeeinrichtung zur optischen Übertragung von analogen elektrischen Signalen gemäß Patentanspruch 1 und ein digitales Übertragungssystem gemäß Patentanspruch 7.

Die analogen elektrischen Signale sind beispielsweise Fernsehsignale oder Videosignale. Aus dem Artikel _{"}DIAMANT - Ein digitales optisches Fernsehverteilnetz ", aus telecom praxis 2/1993, Seiten 38 bis 45, ist ein optisches Übertragungssystem zur optischen digitalen Übertragung von Fernsehsignalen bekannt. Sie werden analog/digital umgesetzt, üblicherweise mittels Pulscodemodulation, elektrisch gemultiplext, sowie elektrisch/optisch umgesetzt; ein optischer Impuls entspricht üblicherweise einem elektrischen Impuls und somit einem Bit. Die nun optisch und digitalen Fernsehsignale werden über ein passives optisches Übertragungsnetz aus Glasfasern und optischen Splittern zu mehreren Empfangseinrichtungen übertragen. Jede Empfangseinrichtung beinhaltet einen Optisch/Elektrisch-Umsetzer und einen Digital/Analog-Umsetzer zur Rückgewinnung der analogen elektrischen Signale. Die Anzahl der gemultiplexten Fernsehsignale wird begrenzt durch die Auflösung und Geschwindigkeit der verfügbaren Digital/Analog-Umsetzer. Jeder Digital/Analog-Umsetzer ist ein aktives Bauelement, das einer Steuerung bedarf und synchronisiert werden muß.
In jeder Empfangseinrichtung muß nach der Digital/Analog-Umsetzung eine Frequenzumsetzung durchgeführt werden, um die Fernsehsignale vom Zwischenfrequenzband ins UHF-Band zu transferieren.

Es ist deshalb eine Aufgabe der Erfindung, analoge elektrische Signale derart optisch digital zu übertragen, daß sie technisch weniger aufwendig auf der Empfangsseite zurückgewonnen werden können.

Diese Aufgabe wird durch die Lehre der unabhängigen Patentansprüche 1 und 7 gelöst. Vorteilhafte Ausgestaltungen sind den abhängigen Patentansprüchen 2 bis 6 und 8 bis 9 zu entnehmen.

Ein besonderer Vorteil der Erfindung ist, daß in den Empfangseinrichtungen zur Digital/Analog-Umsetzung lediglich passive Komponenten erforderlich sind. Die Empfangseinrichtungen sind dadurch billiger, störunempfindlicher, haben eine einfachere Schaltungtechnik und sind für hohe Frequenzen geeignet.

Ein weiterer Vorteil der Erfindung ist, daß durch die Wahl einer geeigneten Abtastfrequenz für die Delta-Sigma-Modulation keine weitere Frequenzumsetzung in den Empfangseinrichtungen erforderlich ist. Dies bedeutet eine weitere Kostenersparnis in den Empfangseinrichtungen, sowohl bei der Fertigung als auch beim Betrieb.

Im folgenden wird die Erfindung anhand eines Ausführungsbeispiels unter Zuhilfenahme der Figuren 1 bis 3 erläutert. Es zeigen:
- Fig. 1: eine schematische Darstellung eines erfindungsgemäßen Übertragungssystems,
- Fig. 2: einen schematisch dargestellten Aufbau einer erfindungsgemäßen Sendeeinrichtung des Übertragungssystem aus Fig.1 und
- Fig. 3: eine schematische Darstellung einer erfindungsgemäßen Empfangseinrichtung des Übertragungssystems aus Fig. 1.

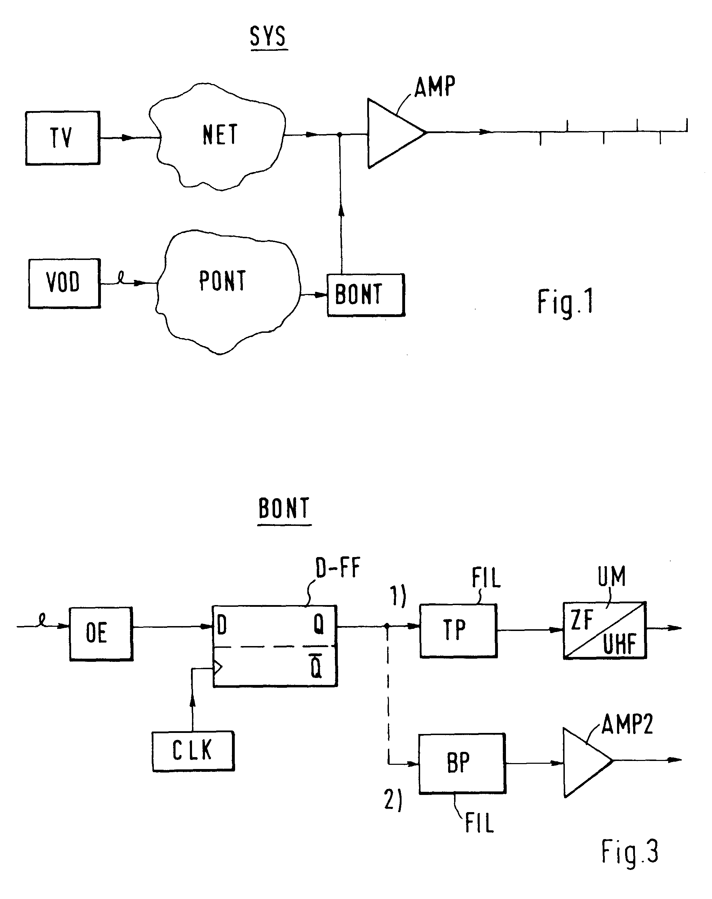

Das Ausführungsbeispiel wird zunächst unter Zuhilfenahme der Fig. 1 erläutert. Fig. 1 zeigt ein erfindungsgemäßes Übertragungssystem. Das Übertragungssystem SYS beinhaltet eine Fernsehkopfstation TV zur analogen Übertragung von analogen Fernsehsignalen über Koaxialkabel und einen Server VOD zur digitalen Übertragung von analogen elektrischen Signalen, insbesondere Videosignale, über optischen Leitungen. Die Videosignale sind beispielsweise von Teilnehmer interaktiv ausgewählte Spielfilme, Lernprogramme, Werbefilme aus der Touristikbranche oder dergleichen. Die Auswahl der Videosignale erfolgt über einen nicht dargestellten Rückkanal, der z.B. über ein Telefonnetz realisiert ist.

Die analogen Fernsehsignale der Fernsehkopfstation TV werden über ein Verteilnetz NET aus Koaxialkabeln und Verstärkern zu mehreren Endverstärker übertragen, von denen einer dargestellt ist. Von jedem Endverstärker AMP werden über ein Koaxialkabel mehrere Endstellen versorgt.

Die analogen elektrischen Signale werden im Server VOD zunächst digitalisiert und elektrisch/optisch umgesetzt und anschließend über ein passives optisches Übertragungsnetz PONT aus Glasfaserleitungen und optischen Splittern, das vorzugsweise baumförmig als Verteilnetz strukturiert ist, zu mehreren Empfangseinrichtungen übertragen, wovon eine dargestellt ist. Die Empfangseinrichtung BONT ist beispielsweise ein sog. optischer Breitbandnetzabschluß. Sie dient zur Rückgewinnung der analogen elektrischen Signale aus den empfangenen optischen Signalen. Die Empfangseinrichtung BONT ist über ein Koaxialkabel mit dem Eingang des Endverstärkers AMP verbunden, um die analogen elektrischen Signale zusammen mit den Fernsehsignalen über das dem Endverstärker AMP nachgeschaltete Koaxialkabel den Enstellen zuzuführen.

Die analogen elektrischen Signale werden im Server VOD mittels des Delta-Sigma-Modulationsverfahrens digitalisiert, so daß für die Rückgewinnung der analogen elektrischen Signale in jeder Empfangseinrichtung BONT lediglich ein Optisch/Elektrisch-Umsetzer und ein passives Tiefpaßfilter oder bei geeigneter Wahl der Abtastfrequenz für die Digitalisierung lediglich ein Optisch/Elektrisch-Umsetzer und ein passives Bandpaßfilter erforderlich sind.

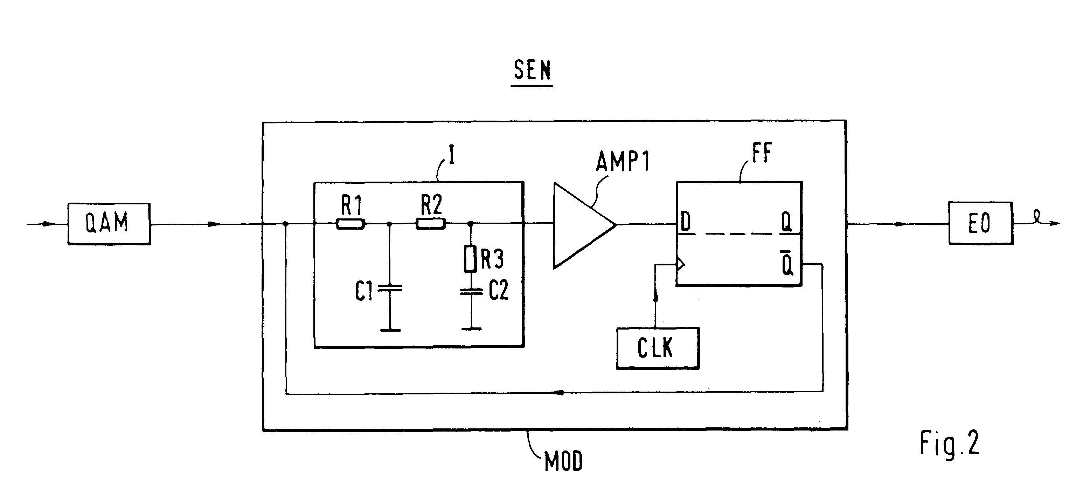

Das Ausführungsbeispiel wird nun weiter unter Zuhilfenahme von Fig. 2 erläutert. Fig. 2 zeigt eine erfindungsgemäße Sendeeinrichtung für den Server des Übertragungssystems aus Fig. 1. Die Sendeeinrichtung SEN dient der optischen digitalen Übertragung analoger elektrischer Signale über optische Leitungen, beispielsweise optisch Glasfaserleitungen. Sie beinhaltet einen Delta-Sigma-Modulator MOD zur Digitalisierung der analogen elektrischen Signale nach dem Delta-Sigma-Modulationsverfahren und einen Elektrisch/Optisch-Umsetzer EO zur Umsetzung der digitalisierten Signale in optische Signale. Der Delta-Sigma-Modulator MOD und der Elektrisch/Optisch-Umsetzer EO sind in Reihe geschaltet.

Der Elektrisch/Optisch-Umsetzer EO ist beispielsweise eine direkt modulierte Laserdiode oder ein Laser mit externem Elektro-Optischen-Modulator, der mit den digitalisierten analogen elektrischen Signale angesteuert wird.

Der Delta-Sigma-Modulator MOD beinhaltet eine Reihenschaltung aus einem Integrator I, einem elektrischen Verstärker AMP1 als Komparator und einer getakteter bistabiler Kippstufe FF als 1-bit Kodierer. Der Integrator I ist vorzugsweise aus einem passiven Tiefpaßfilter aus Widerständen und Kondensatoren aufgebaut. Das Tiefpaß-filter ist beispielsweise ein Tiefpaßfilter 2. Ordnung aus einer Kettenschaltung mit zwei Widerständen R1, R2 in den Längszweigen und einem Kondensator C1 im ersten Querzweig sowie einer Reihenschaltung aus Widerstand R3 und Kondensator C2 im zweiten Querzweig. Die analogen elektrischen Signale werden zusammen mit rückgekoppelten digitalen Signalen im Integrator I akkumuliert, in dem als Komparator geschalteten Verstärker AMP1 mit einem Referenzwert verglichen und anschließend in der bistabilen Kippstufe FF digitalisiert.

Die bistabile Kippstufe FF ist aus einem D-Flipflop aufgebaut. Das D-Flipflop hat einen Signaleingang, einen Takteingang und zwei Ausgänge, einen nichtinvertierenden und einen invertierenden. Der invertierende Ausgang des D-Flipflops ist mit dem Eingang des Integrators I verbunden, um über diese Rückkopplung die Funktion der Delta-Sigma-Modulation durchzuführen. Besonders bei hohen Bitraten, z.B. größer 300 Mhz, wirken sich Laufzeifverzögerungen in der Rückkoppolschleife störend auf die Modulatoreigenschaften aus. Die Bearbeitung eines Bits muß innerhalb einer Bitperiode abgeschlossen sein, die Laufzeitverzögerungen innerhalb der Rückkopplung dürfen deshalb nur ein Bruchteil einer Bitperiode betragen. Aus diesem Grunde ist es vorteilhaft eine monolithisch integrierte Realisierung für Komparator und D-FlipFlop zu verwenden. Das D-Flipflop wird beispielsweise über den Takt eines freilaufenden Oszillators CLK angesteuert. Die Taktfrequenz des Oszillators CLK ist einstellbar und stellt die Abtastfrequenz der Delta-Sigma-Modulation dar.

Die Eigenschaften des Delta-Sigma-Modulators MOD sind von der Höhe der Abtastfrequenz abhängig. Der Quantisierungsrauschabstand als eine wichtige Eigenschaft des Delta-Sigma-Modulators MOD, kann über seine Abtastfrequenz angepaßt werden. Die Höhe der Abtastfrequenz für den Delta-Sigma-Modulator MOD ist von der Signalfrequenz und der geforderten Signalqualität der zu übertragenden analogen Signale vorgegeben. Die Taktfrequenz liegt deutlich über der Nyquist-Frequenz der analogen elektrischen Eingangssignale, um für die Delta-Sigma-Modulation die erforderliche Übertragungsqualität bereitzustellen.
Dem Delta-Sigma-Modulator ist ein QAM-Modulator QAM vorgeschaltet, der die Videosignale nach dem Quadratur-Amplituden-Modulationsverfahren moduliert. Bei einer 64QAM-Modulation werden so z.B. quasi-analoge Ausgangssignale von 8 MHz Bandbreite erzeugt, die zur Übertragung ein Signal-zu-Rausch-Verhältnis von 25 dB erfordern. Innerhalb der Bandbreite von 8 MHz können damit bis zu 38 Mbit/s kodierte Videosignale übertragen werden. Hingegen wäre bei einer vergleichbaren Übertragung eines analogen Fernsehsignals ein Signal-zu-Rauschverhältnis von mindestens 45 dB erforderlich. Mit der Anwendung der QAM-Modulation wird die Anforderungen an den Delta-Sigma-Modulator bezüglich Signal-zu-Rausch-Verhältnis geringer.

Damit kann die Abtastrate reduziert werden, was eine geringere Übertragungsrate auf der digitalen optischen Übertragungsstrecke zur Folge hat. So können vier QAM-Signale mit jeweils 8 MHz Bandbreite, die beispielsweise im Frequenzbereich 8 MHz bis 40 MHz angeordnet sind, mit einer für diese Signalfrequenz und Übertragungsqualität ausreichenden Taktfrequenz von 400 MHz durch den Delta-Sigma-Modulator analog/digital umgesetzt werden.

Im folgenden werden zwei Arten der Übertragung der digitalisierten anlogen Signale und ihrer Rückgewinnung beschrieben.
1) Der Quantisierungsrauschabstand des Delta-Sigma-Modulators MOD kann auch über die Eigenschaft des Integrators I beeinflußt werden. Durch die Abtastfunktion des Delta-Sigma-Modulators entstehen Quantisierungsrauschanteile welche über ein großen Frequenz-bereich gestreut werden. Mit der Realisierung des Integrators I, von beispielsweise Tief-paßfiltern 1. oder 2. Ordnung, werden diese Quantisierungsrauschanteile aus dem Frequenz-bereich des Nutzsignals hinaus zu höheren Frequenzbereichen hin verschoben. Ein solcher Integrator I wird deshalb auch als Noise-Forming Filter bezeichnet. Die digitalen Ausgangssignale des Delta-Sigma-Modulators MOD enthalten die spektralen Frequenzanteile des analogen Nutzsignals wie auch die störenden Quantisierungsrauschanteile. Nach der Elektrisch/Optisch-Umsetzung werden die digitalen optischen Signale über eine Glasfaserleitung und ggf. optischen Splittern zu mehreren Empfangseinrichtungen übertragen. In der Empfangseinrichtung BONT wird das digitale optische Empfganssignal optisch/elektrisch umgesetzt. Das analoge elektrische Nutzignal wird aus dem nun digitalen elektrischen Signal zurückgewonnen, indem durch ein Filter FIL, beispielsweise ein Tiefpaßfilter, die Nutzsignale herausgefiltert und die störenden spektralen Quantisierungsrauschanteile oberhalb des Nutzsignalfrequenzbereiches stark gedämpft werden. Auf ein zusätzliches Nachfilter zur Unterdrückung von störenden Spiegelfrequenzanteilen kann verzichtet werden, da infolge der hohen Überabtastung diese weit oberhalb des Nutzfrequenzbereiches liegen und somit schon im Tiefpaßfilter ausreichend gedämpft werden. In dem Tiefpaßfilter ist damit die gesamte Digital/Analog-Wandlerfunktion verwirklicht, es ist vorzugsweise aus passiven Komponenten aufgebaut und hat einen geringen Leistungsverbrauch.
   In der Empfangseinrichtung BONT müssen die zurückgewonnenen analogen Signale noch mit einem ZF/UHF-Umsetzer in den vorgegebenen UHF-Bereich umgesetzt werden, da ihre Übertragung auf dem dem Endverstärker AMP nachgeschalteten Koaxialkabel im UHF-Frequenzbereich von beispielsweise 400 MHz bis 450 MHz erfolgt.
   Die analogen Fernsehsignale von der Fernsehkopfstation werden beispielsweise im Frequenzband 50 MHz bis 400 MHz übertragen. Mit einem Kombiner werden die zurückgewonnenen analogen Videosignale im Frequenzmultiplexverfahren mit den analogen Fernsehsignalen überlappungsfrei zusammengefaßt, gemeinsam im Endverstärker verstärkt und über Koaxialkabel zu den Endstellen übertragen.
2) Bei geeigneter Wahl der Abtastfrequenz des Delta-Sigma-Modulators MOD entstehen im Spektrum des Digitalsignals Spiegelfrequenzen welche in den Frequenzbereich von z.B. 400 MHz bis 450 MHz fallen. Dieser Frequenzbereich ist für die Übertragung der in der Empfangseinrichtung BONT zurückgewonnenen analogen Videosignale in dem nachgeschalteten Koaxialkabel vorgesehen. Das Filter FIL in der Empfangseinrichtung BONT muß in diesem Fall als Bandpaßfilter realisiert werden, das lediglich Signale im UHF- Frequenzbereich 400 MHz bis 450 MHz durchläßt. Die aus den Spiegelfrequenzen rückgewonnenen und gefilterten Videosignale haben eine geringe Amplitude, sie werden deshalb in einem nachgeschalteten VerstärkerAMP2 auf einen vorgegebenen Wert verstärkt. Ein ZF/UHF-Umsetzer wird nicht mehr benötigt, da nun die analogen Signale schon im geforderten UHF-Frequenzbereich vorliegen.
   Jede Empfangseinrichtung BONT beinhaltet zur Rückgewinnung der analogen Signale einen Optisch/Elektrisch-Umsetzer, das Bandpaßfilter FIL, das nur Signale im Frequenzbereich 400 MHz bis 450 MHz durchläßt und den Verstärker AMP2.

Das Ausführungsbeispiel wird nun weiter unter Zuhilfenahme von Fig. 3 erläutert. Fig. 3 zeigt eine erfindungsgemäße Empfangseinrichtung des Übertragungssystems aus Fig.1.
Die Empfangseinrichtung BONT beinhaltet einen Optisch/Elektrisch-Umsetzer OE, eine bistabile Kippstufe D-FF, ein passives elektrisches Filter zur Rückgewinnung der analogen elektrischen Signalen und nach Bedarf einen UHF-Frequenzumsetzer.
Der Optisch/Elektrisch-Umsetzer OE ist beispielsweise aus einer Photodiode mit nachgeschaltetem Verstärker aufgebaut welche die empfangenen digitale optische Signale in digitale elektrische Signale umsetzt. Zwischen Optisch/Elektrisch-Umsetzer OE und passivem elektrischem Filter FIL ist eine getaktete bistabile Kippstufe D-FF geschaltet die zur Regeneration der digitalen elektischen Eingangssignale dient. Die getaktete bistabile Kippstufe D-FF ist beispielsweise ein D-FlipFlop dessen Takt über eine Taktableitungsschaltung aus dem emp-fangenen Digitalsignal abgeleitet wird. Die Taktfrequenz ist identisch mit der Abtastfrequenz des Delta-Sigma-Modulators MOD der Sendeeinrichtung SEN. Die regenerierten digitale Signale werden dem passiven elektrischen Filter FIL zugeführt, mittels dessen sie in analoge elektri-sche Signale zurückgewandelt werden. Für den Fall der beschriebenen Übertragung nach 1) ist das elektrische Filter FIL ein passives Tiefpaßfiler mit nachgeschaltetem ZF/UHF-Umsetzer UM. Durch den ZF/UHF-Umsetzer UM werden diese analogen elektrischen Signale vom ZF- in den geforderten UHF-Bereich 400 MHz bis 450 MHz umgesetzt. Für den Fall der Ubertra-gung nach 2) ist das elektrische Filter FIL eine passives Bandpaßfilter FIL mit nachgeschaltetem Verstärker AMP2.

Die analogen elektrischen Signale können vor der Digitalisierung im Server zunächst mittels eines sog. MPEG-Verfahrens digitalisiert und digital abgespeichert werden; MPEG = Motion Picture Group. Beim Abruf von Teilen der abgespeicherten Signale durch Abrufsignale von Teilnehmern werden mehrere abgerufene digitalisierte Signale zusammengefaßt und anschließend mit dem QAM-Verfahren moduliert. Dadurch entstehen quasi-analoge Signale, die im Delta-Sigma-Modulator MOD digitalisiert werden.

## Patentansprüche

1. Sendeeinrichtung ( SEN ) zur optischen Übertragung von analogen oder quasi-analogen elektrischen Signalen über optischen Leitungen, mit
- einem Delta-Sigma-Modulator ( MOD ) zur Digitalisierung der analogen oder der quasi-analogen elektrischen Signale nach dem Delta-Sigma-Modulationsverfahren und
- einem Elektrisch/Optisch-Umsetzer ( EO ) zur Umsetzung der digitalisierten Signale in optische Signale.

2. Sendeeinrichtung ( SEN ) nach Anspruch 1, dadurch gekennzeichnet, daß die analogen elektrischen Signale Videosignale sind und die Sendeeinrichtung ( SEN ) zur Einspeisung der optischen Signale in ein passives optisches Verteilnetz dient.

3. Sendeeinrichtung ( SEN ) nach Anspruch 1, dadurch gekennzeichnet, daß der Delta-Sigma-Modulator ( MOD ) eine Reihenschaltung aus einem Integrator (I), einem elektrischen Verstärker (AMP1) und einer getakteter bistabiler Kippstufe ( FF ) enthält, und daß ein Ausgang der bistabilen Kippstufe ( FF ) auf den Eingang des Integrators zurückgekoppelt ist.

4. Sendeeinrichtung ( SEN ) nach Anspruch 3, dadurch gekennzeichnet, daß der Integrator (I) aus einem passiven Tiefpaß aus Widerständen und Kapazitäten aufgebaut ist, daß die bistabile Kippstufe ( FF ) aus einem D-Flipflop aufgebaut ist, und daß der invertierende Ausgang des D-Flipflops mit dem Eingang des Integrators (I) verbunden ist.

5. Sendeeinrichtung ( SEN ) nach Anspruch 1, dadurch gekennzeichnet, daß die analogen elektrischen Signale vor der Digitalisierung in einem QAM-Modulator ( QAM ) nach dem Quadraturamplituden-Modulationsverfahren moduliert werden.

6. Digitales optisches Übertragungssystem ( SYS ) mit wenigstens einer Sendeeinrichtung ( SEN ) nach Anspruch 1, einem passiven optischen Übertragungsnetz (PONT) und mehreren Empfangseinrichtungen ( BONT ),
bei dem jede Empfangseinrichtung (BONT) einen Optisch/Elektrisch-Umsetzer ( OE ) und ein passives elektrischen Filter ( FIL ) zur Rückgewinnung der analogen oder quasi-analogen elektrischen Signale aus den empfangenen optischen Signalen beinhaltet.

7. Digitales optisches Übertragungssystem ( SYS ) nach Anspruch 6, dadurch gekennzeichnet, daß die wenigstens eine Sendeeinrichtung ( SEN ) eine Sendeeinrichtung ( SEN ) nach Anspruch 3 ist, und daß in den Empfangseinrichtugen ( BONT ) jedem passiven Filter ( FIL ) eine getaktete bistabile Kippstufe ( D-FF ) vorgeschaltetet ist, die mit der gleichen Taktfrequenz angesteurt wird, wie die bistabile Kippstufe ( FF ) der Sendeeinrichtung (SEN).

8. Digitales optisches Übertragungssystem ( SYS ) nach Anspruch 7, dadurch gekennzeichnet, daß die Taktfrequenzen der bistabilen Kippstufen (D-FF, FF) derart gewählt sind, daß die Spiegelfrequenzen der Ausgangssignale der bistabilen Kippstufe ( FF ) der Empfangseinrichtungen ( BONT ) in einem vorgegebenen Frequenzbereich liegen, daß im Filter ( FIL ) Signale, die frequenzmäßig unterhalb des vorgegebenen Frequenzbereichs liegen, gedämpft werden, und daß die weitergeleiteten Signale im Verstärker ( AMP2 ) auf einen vorgegebenen Wert verstärkt werden.

9. Digitales optisches Übertragungssystem ( SYS ) nach Anspruch 6 oder 7, dadurch gekennzeichnet, daß jedes passive Filter ( FIL ) ein passiver Tiefpaß oder ein passiver Bandpaß ist.
